# EUROPEAN PATENT APPLICATION

(11) **EP 4 710 776 A1**
(43) Date of publication of application: **18.03.2026**
(21) Application number: 24803789.7
(22) Date of filing: 13.05.2024
(51) Int. Cl.: A23P 30/00, A23P 10/00, A23L 5/10

(54) **SPRING ROLL SKIN FORMATION MODULE AND SPRING ROLL MANUFACTURING APPARATUS COMPRISING SAME**

(30) Priority: 11.05.2023 KR 20230061175
(71) Applicant: CJ Cheiljedang Corporation, Seoul 04560 (KR); Daehan Machinery Co., Ltd., Tongjin-eup Gimpo-si, Gyeonggi-do 10038 (KR)
(72) Inventor: SON, Junghwan, Seoul 04560 (KR); SEONG, Jae Won, Osan-si Gyeonggi-do 18145 (KR); GONG, Yongwha, Hwaseong-si Gyeonggi-do 18437 (KR); CHO, Hanjun, Seoul 04560 (KR); CHANG, Duk Jin, Seoul 04560 (KR); KIM, Young Sik, Seoul 04560 (KR)
(74) Representative: Meissner Bolte Partnerschaft mbB
(86) International application number: PCT/KR2024/006436
(87) International publication number: WO 2024/232736

(57) **Abstract**

The present invention provides a skin formation module comprising: a drum that is rotatably installed; a heating unit for supplying heat to the drum; and a batter spray unit for spraying batter onto the outer circumferential surface of the drum. The present invention also provides a spring roll manufacturing apparatus including the skin formation module, a cutting module, a powder module, a stuffing module, a folding module, a rolling module, and a conveyor belt that passes through each module.

## Description

### [Technical Field]

The present invention relates to a module for forming and providing the skin of a spring roll and a spring roll manufacturing apparatus including the same.

### [Background Art]

Spring rolls are a dish made by stuffing meat, seafood, or vegetables inside a dough skin made from grains like rice, and then rolling it up.

These spring rolls are originally popular in Asian countries like China, Vietnam, and Korea, spring rolls have recently gained popularity worldwide.

Pre-made spring rolls are now available for easy home cooking.

* Related prior art will be found as below.

First, a spring roll manufacturing apparatus disclosed in Patent Document 1 (Korean Patent Registration No. 10-2068897) by the applicant of the present invention includes a supply unit that supplies rice paper corresponding to the skin of a spring roll, a moving unit that moves the rice paper supplied through the supply unit, a softening unit that induces softening of the rice paper moved through the moving unit, an insertion unit that inserts filling into the rice paper softened by the softening unit, a folder unit that folds the rice paper on which the filling is placed, and a rotating unit that rolls the rice paper folded by the folder unit, wherein the insertion unit is configured to automatically manufacture spring rolls by cutting and dividing the filling.

This type of spring roll manufacturing apparatus has the advantage of easily mass-producing spring rolls; however, since, in the spring roll manufacturing apparatus, pre-manufactured rice paper is provided and used as the skin instead of manufacturing the skin separately, there are limitations in using skins made of other materials or selecting skins with a desired material or texture to manufacture spring rolls, and this also applies to a manufacturing apparatus disclosed in Patent Document 2 (Korean Patent Registration No. 10-2329827).

In addition, in the case of Patent Document 1, square rice paper is inserted in a diamond shape to wrap contents; however, this type of rice paper folds in four vertex directions, resulting in a limited bonding area.
(Patent Document 1) KR 10-2068897 B1
(Patent Document 2) KR 10-2329827 B2

### [Disclosure]

### [Technical Problem]

Accordingly, the present invention has been devised to solve the problems of the above-mentioned prior art, and provides a spring roll manufacturing apparatus that is capable of manufacturing spring rolls by separately providing a skin formation module to form and provide skins of various materials or textures, and also increases the bonding area of the skin to increase the completeness of the spring roll.

### [Technical Solution]

According to an aspect of the present invention, there is provided a skin formation module including: a drum that is rotatably installed; a heating unit for supplying heat to the drum; and a batter spray unit for spraying batter onto an outer circumferential surface of the drum.

The skin formation module may further include a batter hopper in which batter is accommodated, and a batter pump for supplying the batter accommodated in the batter hopper to a battery spray unit.

A skin material accommodated in the batter hopper may be supplied to the batter spray unit by the batter pump and may be sprayed to one side of a surface of the drum, and the sprayed batter may become skin in a cooked state by the surface of the drum heated by a heating unit and may be discharged to the other side of the drum.

The skin formation module may further include: a housing that wraps an upper part of the drum; and a steam exhaust unit in which an upper part of the cover is open.

According to another aspect of the present invention, there is provided a spring roll manufacturing apparatus including: the skin formation module; and a cutting module, a powder module, a stuffing module, a folding module, and a rolling module, which are sequentially positioned at a rear end of the skin formation module, and a conveyor belt that passes through each of the modules from the rear end of the skin formation module.

The cutting module may include a cutting blade including a straight line portion and a bending portion bent to form a mountain shape in a center of the straight line portion.

A skin discharged from the skin formation module may be inserted into the cutting module, and front and rear ends of the inserted skin may be cut and discharged in a shape corresponding to the cutting blade.

The powder module may include: an application unit positioned at an upper part of the conveyor belt; and a vibration unit positioned at an upper part of the application unit.

The application unit may apply powder onto a surface of the skin inserted into the powder module, and the vibration unit may apply vibration to the application unit.

The stuffing module may include: a timing belt positioned in a direction perpendicular to a direction of the conveyor belt at the upper part of the conveyor belt; a supply unit for supplying contents of a spring roll to an ejection unit positioned at one side of the timing belt; a cutting unit positioned at the ejection unit; a stopper positioned on the conveyor belt; and a pusher positioned at one side of the stopper.

The supply unit may include an accommodation portion positioned at one side of the conveyor belt, a screw positioned inside the accommodation portion, and a content pump positioned at one side of the screw and for conveying the contents accommodated in the accommodation portion to the ejection unit.

The contents supplied from the supply unit to the ejection unit may be cut by the cutting unit, may be ejected onto the timing belt, may be transported onto the conveyor belt and may fall onto the skin that passes onto the conveyor belt by an action of the pusher in a state in which the contents stop in the center of the conveyor belt by the stopper.

The folding module may include: a side fixing unit positioned at the upper part of the conveyor belt; a side spray unit positioned at a lower part of the side fixing unit and for spraying air upwards; and an upper pressing unit positioned at a rear end of the side fixing unit.

A skin having a surface with contents thereon may be inserted into the folding module, and after the skin at both sides of the contents is pressurized by the side fixing unit and both sides of the skin are folded inwards by air pressure sprayed by the side spray unit, the upper part of the skin may be pressurized by an upper pressing unit.

The rolling module may include a contact unit that is positioned at the upper part of the conveyor belt so that the upper part of the skin inserted from the folding module contacts.

The upper part of the skin with the contents stuffed inside inserted into the rolling module may come into contact with the contact unit and may be rotated by a transportation action of the conveyor belt so that the skin wraps the contents completely.

A belt portion of the conveyor belt may have a mesh shape.

### [Advantageous Effects]

According to a skin formation device and a spring roll manufacturing apparatus including the same according to the present invention, the following effects can be attained.
1) A skin formation module is separately provided to form and provide skins of various materials or textures, not ready-made ones, so that spring rolls having various skins can be manufactured.
2) A cutting module cuts the skin into a shape with a large bonding area so that the completeness of the spring roll can be increased.
3) A powder module additionally applies powder to the skin so that the texture of spring rolls can be enhanced.

### [Brief Description of the Drawing]

FIG. 1 is a schematic view of a spring roll manufacturing apparatus according to an embodiment of the present invention.
FIG. 2 is a full perspective view of the spring roll manufacturing apparatus according to an embodiment of the present invention.
FIG. 3 is a view of the configuration of a skin formation module as viewed from the front end.
FIG. 4 is a view of the state in which batter is supplied to the skin formation module and the skin is formed, as viewed from the front end.
FIG. 5 is a perspective view of the state in which the skin formed by the skin formation module is inserted into a cutting module.
FIG. 6 is a perspective view of the inside of the cutting module.
FIG. 7 is a plan view of the shape of the skin cut by the cutting module.
FIG. 8 is a perspective view of a powder module.
FIG. 9 is a perspective view of the state in which powder is applied to the skin using the powder module.
FIG. 10 is a perspective view of a stuffing module.
FIGS. 11 through 13 are perspective views illustrating an operation of the stuffing module.
FIGS. 14 and 15 are perspective views illustrating an operation of a folding module.
FIG. 16 is a plan view and a longitudinal cross-sectional view illustrating the state in which the skin with contents thereon is folded by the operation of the folding module, in order.
FIG. 17 is a perspective view illustrating a rolling module.
FIG. 18 is a longitudinal cross-sectional view illustrating the state in which the skin with the contents stuffed inside is rotated by the rolling module and wraps the contents.

### [Detailed Description of Preferred Embodiments]

The above-described objectives, features, and other advantages of the present invention will become more apparent by describing in detail embodiments of the present invention with reference to the accompanying drawings. In this process, the thickness of lines and the sizes of components illustrated in the drawings may be exaggerated for clarity and convenience of explanation. In addition, the terms described below are defined in consideration of their functions in the present invention and may vary depending on the intentions or practices of the user or operator. Thus, the definitions of these terms should be based on the contents throughout this specification.

Furthermore, the described embodiments are provided as examples for the purpose of explaining the invention and do not limit the technical scope of the present invention.

Hereinafter, a skin formation module 100 and a spring roll manufacturing apparatus including the same according to an embodiment of the present invention will be described in detail with reference to the accompanying drawings.

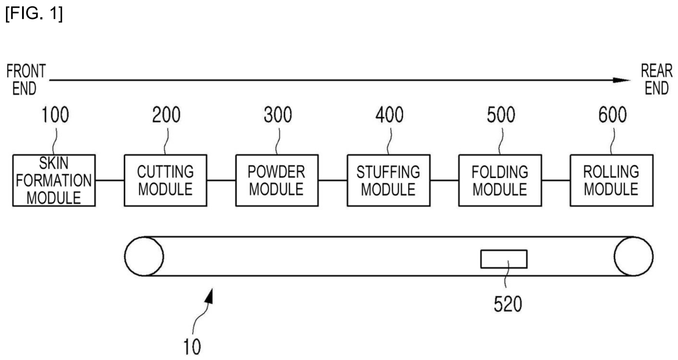

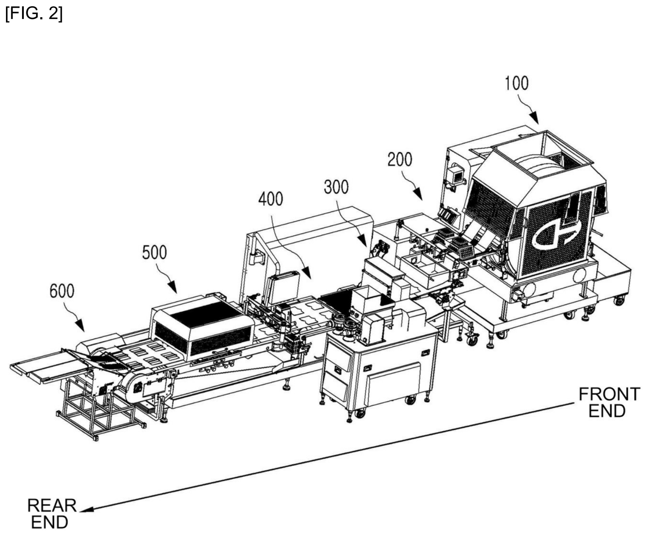

As illustrated in FIGS. 1 and 2, the spring roll manufacturing apparatus according to an embodiment of the present invention includes the skin formation module 100, a cutting module 200, a powder module 300, a stuffing module 400, a folding module 500, a rolling module 600, and a conveyor belt 10.

In the following description, the skin formation module 100 side is described as the front end, the rolling module 600 side is described as the rear end.

In addition, reference numeral 1 represents a skin, and reference numeral 2 represents contents to be stuffed inside the skin.

The conveyor belt 10 is positioned at the rear end of the skin formation module 100 and is positioned to pass through the cutting module 200, the powder module 300, the stuffing module 400, the folding module 500, and the rolling module 600 described above.

The skin is formed by the skin formation module 100 and passes through the cutting module 200, the powder module 300, the stuffing module 400, the folding module 500, and the rolling module 600, which are sequentially positioned at the rear end of the skin formation module 100 by using the conveyor belt 10.

The conveyor belt 10 may be configured as one body to pass through all of the modules, but a plurality of conveyor belts 10 may be configured in a separated shape for each module so that the plurality of conveyor belts 10 may be positioned close to each other and thus the skin may be transported.

In addition, a belt portion on which the skin is put from the conveyor belt has a mesh shape.

The skin formation module 100 is configured to manufacture and provide the skin that wraps the outer surface of the spring roll, and the cutting module 200 may form a shape by cutting the formed skin, and the powder module 300 may provide a texture to the spring roll completed by applying a powder.

The stuffing module 400 adds contents (filling) onto the surface of the formed skin, and the folding module 500 is configured to fold the skin with the contents thereon, and the rolling module 600 is configured to rotate and roll the skin folded with the contents thereon, so that the skin completely wraps the outside of the contents and the shape of the spring roll is finally formed.

Hereinafter, a configuration and an operation of each of the modules that constitute the spring roll manufacturing apparatus according to an embodiment of the present invention will be described in detail.

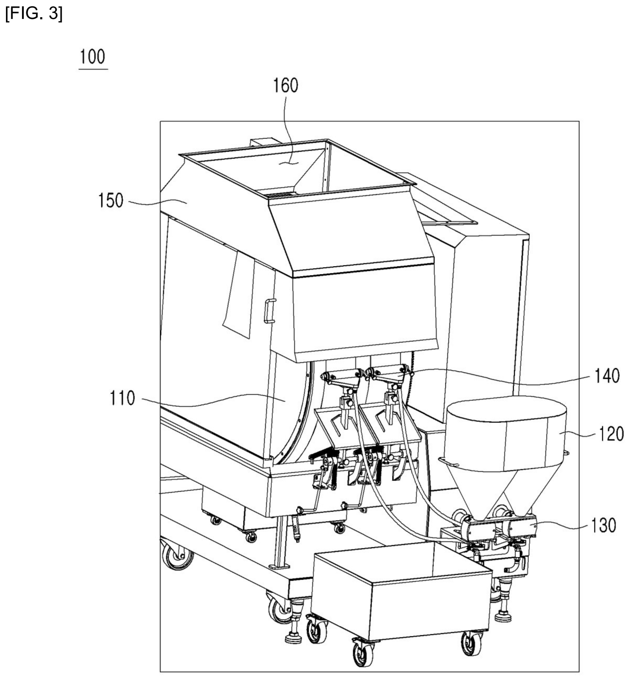

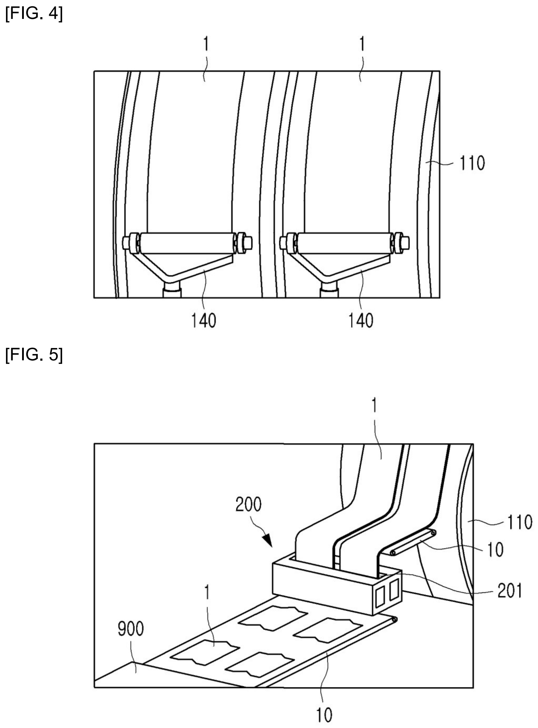

First, the skin formation module 100 will be described in detail with reference to FIGS. 3 and 4.

The skin formation module 100 is configured to form the skin that wraps the outer surface of the spring roll, and includes a drum 110, a heating unit (not shown), a batter hopper 120, a batter pump 130, a batter spray unit 140, a cover 150, and a steam exhaust unit 160.

The drum 110 has a rotatable cylindrical shape. The material of the drum 110 is not limited, but may include iron or a material with carbon coated on the surface of iron.

The heating unit supplies heat to the drum 110 so that the drum 110 is heated at a predetermined temperature or more. The configuration of the heating unit may be positioned on the lower side of the drum 110, or preferably inside the drum 110.

The batter hopper 120 has a shape of a hopper with a certain space therein, and batter that is a material of the skin is accommodated in the batter hopper 120.

The batter is a type of dough, and the batter is the dough used for spring rolls, and is a mixture of powders such as grains and liquids such as water, is a mixture with a thinner viscosity than dough, which is used to make pizza or bread, and is closer to a liquid, making it sprayable.

The batter pump 130 pumps the batter accommodated in the batter hopper 120 to be supplied to the batter spray unit 140.

The batter spray unit 140 is positioned at one side of the drum 110, i.e.., a point side of the drum 110 and is connected to the batter pump 130 via a hose.

The batter spray unit 140 sprays the batter supplied via the hose from the batter hopper 120 by the batter pump 130 onto an outer circumferential surface of the drum 110.

As illustrated in FIGS. 3 and 4, the batter spray unit 140 may be configured to include a straight line-shaped nozzle, or a plurality of nozzles arranged in a straight line so that the batter can be uniformly sprayed onto the outer circumferential surface of the drum 110.

Thus, the batter sprayed from the batter hopper 120 is sprayed onto the outer circumferential surface of the rotating drum 110, forming a surface shape surrounding the outer circumferential surface of the drum 110.

The cover 150 is positioned to wrap the upper part of the drum 110. By installing the cover 150, damage caused by contact with workers from above or other causes can be prevented.

The steam exhaust unit 160 is positioned at the upper part of the cover 150.

The steam exhaust unit 160 is configured in a form in which the upper part of the cover 150 is partially open.

While the batter is sprayed onto the surface of the drum 110 and is heated, moisture is evaporated, and steam is generated, and the generated steam is collected at the upper part of the cover 150, causes condensation, and falls onto the surface of the batter, so that the batter can be damaged.

The steam generated as the batter cooks is discharged to the upper part of the cover 150 through the steam exhaust unit 160, thereby preventing damage to the batter due to condensation.

The operation of the skin formation module 100 will be specifically described with reference back to FIGS. 3 and 4.

The batter accommodated in the batter hopper 120 is supplied to the batter spray unit 140 through the hose and is sprayed to one side of the surface of the drum 110 as the batter pump 130 operates.

The batter sprayed onto the surface of the drum 110 becomes the skin in a cooked state by rotation of the drum 110 heated by the heating unit, forms a belt shape, is moved to the other side of the surface of the drum 110 and is discharged.

The discharged skin is inserted into the cutting module 200 disposed at the rear end of the skin formation module 100 by the conveyor belt 10 (see FIG. 5).

In this case, the steam generated when the batter cooks, is discharged to the upper part of the drum 110 through the steam exhaust unit 160.

Next, the cutting module 200 will be described in detail with reference to FIGS. 5 through 7.

The cutting module 200 is positioned at the rear end of the skin formation module 100 and is configured to cut the formed skin, and includes a case 210, rollers 220 and 230, and a cutting blade 240.

The case 210 forms the exterior of the cutting module 200 and may have a box shape with a certain space therein.

An inlet 201 and an outlet (not shown) in which the upper and lower parts of the case 210 are respectively open, are positioned.

The rollers 220 and 230 are positioned inside the case 210. Preferably, two rollers 220 and 230 including a main roller 220 and an auxiliary roller 230 are positioned close to each other, and a driving unit (not shown) such as a motor is positioned at one side of the main roller 220 and the auxiliary roller 230, so that the main roller 220 and the auxiliary roller 230 are rotatably configured.

The cutting blade 240 is positioned on the surface of the main roller 220. However, the cutting blade 240 may also be positioned at the auxiliary roller 230, and only needs to be positioned on either of the two rollers 220 and 230.

The cutting blade 240 is positioned on the surface of the main roller 220 and includes a straight line portion 241 and a bending portion 242.

The straight line portion 241 is disposed from the outside of the surface of the main roller 220 toward the center, and the bending portion 242 is bent and positioned so that the center of the main roller 220 and 230 forms a mountain shape.

Skins inserted into the inside of the case 210 through an insertion portion of the upper part of the case 210 are cut by the cutting blade 240 while passing between the main roller 220 and the auxiliary roller 230, are spaced apart from each other, and are discharged to a discharge portion at the lower part of the case 210.

The operation of the cutting module 200 will be described with reference back to FIGS. 5 through 7.

The skin formed by the skin formation module 100 is transported to the cutting module 200 by the conveyor belt 10.

The transported skin is inserted into the inside of the case 210 through the inlet 201 of the case 210.

The inserted skin is moved down by rotation of the main roller 220 and the auxiliary roller 230, is cut by the cutting blade 240 and is discharged through the discharge portion.

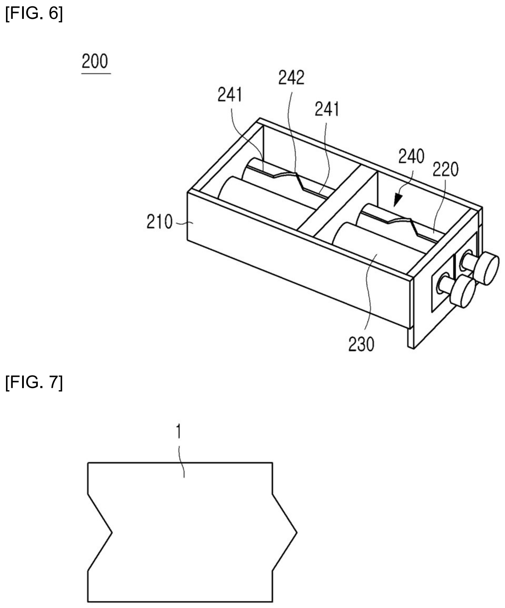

As illustrated in FIG. 7, the skin cut by the cutting blade 240 forms a shape in which the front and rear ends of the skin correspond to the shape of the cutting blade 240.

That is, straight line and bending portions are formed at the front and rear ends of the skin, respectively.

Specifically, the bending portion 242 is concavely recessed toward the center at the front end of the skin, and the bending portion 242 forms an outwardly convex shape at the rear end of the skin.

Owing to the shape of the skin, the bonding area of the skin is increased in subsequent processes so that the completeness of the spring rolls can be increased.

The skin cut by the cutting module 200 is transported to the powder module 300 through the conveyor belt 10.

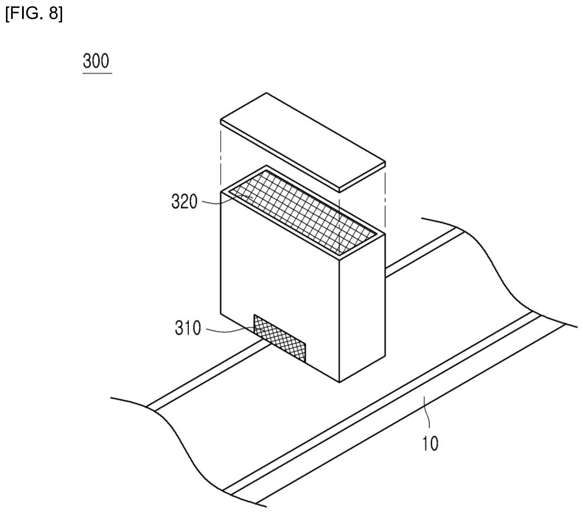

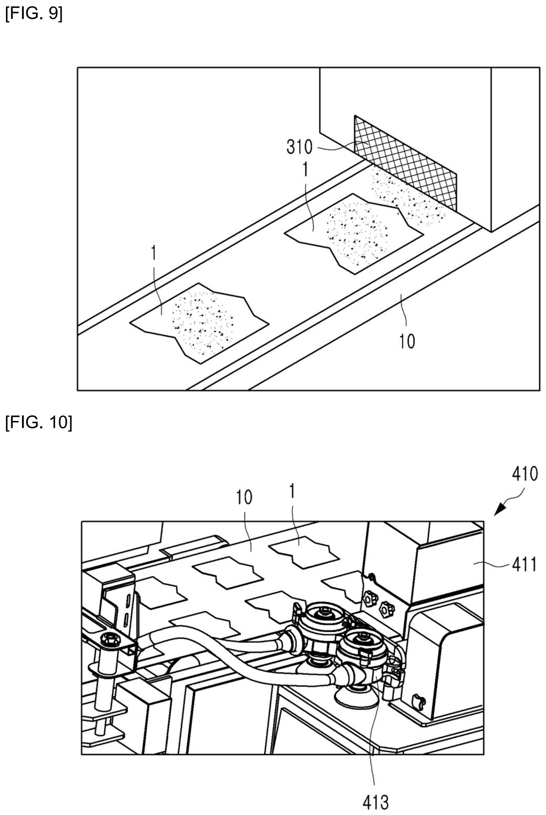

Next, the powder module 300 will be described in detail with reference to FIGS. 8 and 9.

The powder module 300 is positioned at the rear end of the cutting module 200 and is configured to apply powder to the cut skin.

The powder applied through the powder module 300 may be, for example, powder made by grinding grains other than those included in the batter, powder made by coarsely grinding the same grains, powder made by crushing nuts, or breadcrumbs.

The powder module 300 includes an application unit 310 and a vibration unit 320.

The application unit 310 is positioned at the upper part of the conveyor belt 10 that passes through the powder module 300. The application unit 310 is configured in a mesh shape.

The vibration unit 320 includes a device that is positioned at the upper part of the application unit 310 and applies vibration. The vibration unit 320 is configured to apply vibration to the application unit 310.

The operation of the powder module 300 will be described with reference to FIGS. 8 and 9.

The powder is supplied from one side of the powder module 300, preferably from above, and the supplied powder passes through the vibration unit 320 and is applied onto the skin on the conveyor belt 10 through the application unit 310.

In this case, the powder is uniformly dispersed by the vibration unit 320, passes through the application unit 310 and is uniformly applied onto the entire skin.

Since the conveyor belt 10 has a mesh shape as described above, among the powders being applied, any excess powder or powder applied to a gap between the skins passes through the conveyor belt and falls downward.

The skin to which the powder is applied by the powder module 300 is transported to the stuffing module 400 by the conveyor belt 10.

In this way, the powder is applied to the skin through the powder module 300 so that a texture of the completed spring roll can be increased.

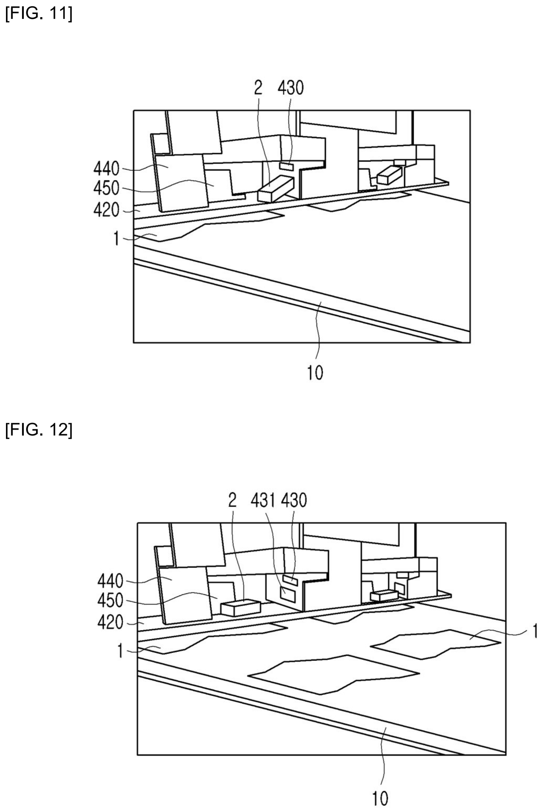

The stuffing module 400 will be described with reference to FIGS. 10 through 12.

The stuffing module 400 is configured to stuff contents inside the skin, and includes a supply unit 410, an ejection unit 431, a timing belt 420, a cutting unit 430, a stopper 440, and a pusher 450.

The supply unit 410 is positioned at one side of the conveyor belt 10 that passes through the stuffing module 400. The supply unit 410 includes an accommodation portion 411, a screw (not shown), and a content pump 413.

The accommodation portion 411 has a space therein, and contains contents of the spring roll, i.e., contents to be stuffed inside the skin.

The screw is rotatably installed inside the accommodation portion 411, and is transported to one side of the accommodation portion 411 while the contents in the accommodation portion 411 are mixed by the action of the screw.

The content pump 413 is positioned at one side of the accommodation portion 411, and the contents in the accommodation portion 411 are conveyed and discharged toward an outlet located on the upper part of the conveyor belt 10.

The content pump 413 and the ejection unit 431 may be connected to each other by the hose so that the contents can be conveyed to the ejection unit 431 by the action of the content pump 413.

The timing belt 420 is positioned at the upper part of the conveyor belt 10. The transportation direction of the timing belt 420 is installed in a direction perpendicular to a travel direction of the conveyor belt 10, and the ejection unit 431 through which the contents to be conveyed to the supply unit 410 is positioned at the upper part of the timing belt 420.

The cutting unit 430 is positioned to ascend or descend at the ejection unit 431. The contents ejected by the ejection unit 431 are cut by the operation of the cutting unit 430.

The stopper 440 forms a wall shape on the timing belt 420 and is positioned. Specifically, the stopper 440 is spaced apart from the ejection unit 431 by a certain distance and is disposed in facing positions.

The pusher 450 is positioned to enable an appearance action in a lengthwise direction of the conveyor belt 10 at one side of the stopper 440. Specifically, the pusher 450 is positioned at the stopper 440 in a space between the stopper 440 and the ejection unit 431.

The operation of the stuffing module 400 will be described with reference back to FIGS. 10 through 12.

The contents accommodated in the accommodation portion 411 are mixed by the action of the screw and are transported to one side of the accommodation portion 411.

The contents transported to one side of the accommodation portion 411 are conveyed to the ejection unit 431 through the hose by the action of the content pump 413.

The conveyed contents 2 are ejected through the outlet, and the ejected contents are cut by the operation of the cutting unit 430 and fall onto the timing belt 420.

The contents that fall onto the timing belt 420 are conveyed to the stopper 440 by the action of the timing belt 420 and stop on the timing belt 420 by the stopper 440.

Subsequently, the pusher 450 operates, pressurizes the contents on the timing belt 420 and drops the contents onto the upper surface of the skin transported by the conveyor belt 10.

The cutting unit 430, the timing belt 420, and the pusher 450 operate at proper time intervals so that the operation of the stuffing module 400 can be performed.

The skin that passes through the stuffing module 400 with the contents thereon is inserted into the folding module 500 by the conveyor belt 10.

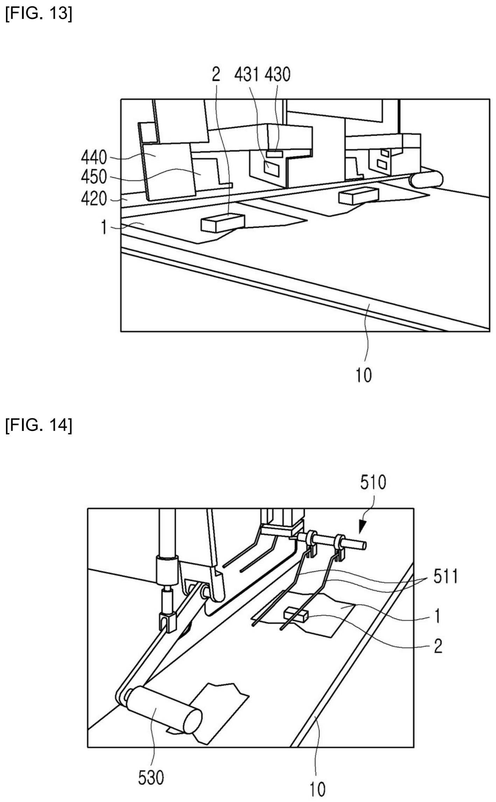

The folding module 500 will be described with reference to FIGS. 13 through 15.

The folding module 500 is configured to fold the skin with the contents thereon by using the stuffing module 400, and includes a side fixing unit 510, a side spray unit 520, and an upper pressing unit 530.

The side fixing unit 510 is positioned at the upper part of the conveyor belt 10. The side fixing unit 510 is positioned to enable an ascending/descending action. For example, the side fixing unit 510 may be connected to a cylinder and a piston rod and configured to enable an ascending/descending action, and the present invention is not limited thereto.

The side fixing unit 510 pressurizes the side of the skin that passes through the top of the conveyor belt 10 by the descending action. Specifically, the side fixing unit 510 pressurizes the skin part close to both sides of the contents put on the skin.

The side fixing unit 510 includes two fixing bars 511 that extend in the lengthwise direction of the conveyor belt 10.

A distance between the two fixing bars 511 is at least as wide as the width of the contents put on the skin.

The side spray unit 520 is positioned at the lower part of the conveyor belt 10 in a portion where the side fixing unit 510 is positioned. The side spray unit 520 sprays air from the lower side of the skin.

Since as described above, the conveyor belt 10 has a mesh shape, air sprayed by the side spray unit 520 positioned at the lower part of the conveyor belt 10 passes through the conveyor belt 10 and is sprayed onto the lower side of the skin.

The upper pressing unit 530 is positioned at the rear end of the side fixing unit 510 in the upper part of the conveyor belt 10. The upper pressing unit 530 is configured to enable an ascending/descending action, like the side fixing unit 510.

The operation of the folding module 500 will be described with reference back to FIGS. 13 through 15.

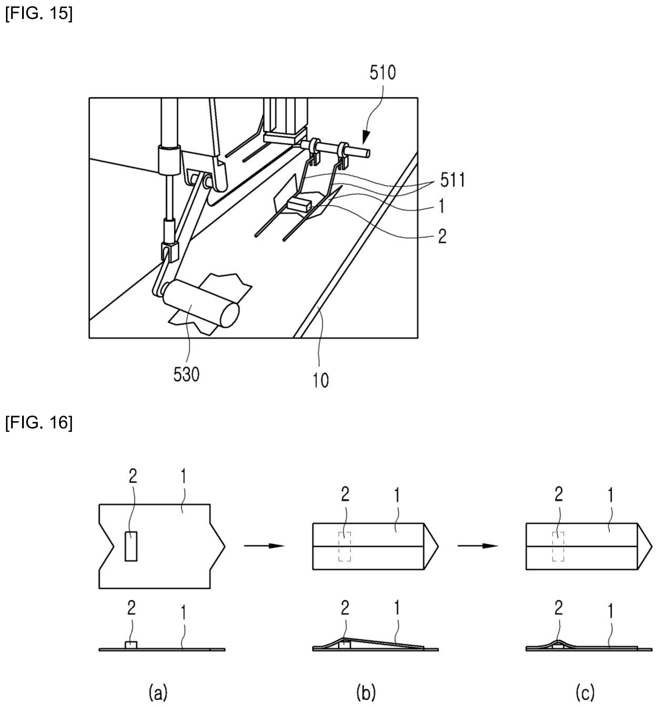

As shown in FIG. 15A, the skin with the contents thereon in the stuffing module 400 is inserted into the folding module 500 by the conveyor belt 10.

When the skin with the contents thereon passes through the lower part of the side fixing unit 510, the side fixing unit 510 descends and presses and fixes the skin portion of both sides of the contents.

In this state, air is sprayed by the side spray unit 520, and both sides of the skin are lifted by sprayed air pressure and are folded inwards, as shown in FIG. 15B.

When the skin that is folded inwards is transported to the rear end by the conveyor belt 10 and is positioned at the lower part of the upper pressing unit 530, the upper pressing unit 530 descends and presses the upper part of the skin, specifically, the upper part of the rear end of the contents.

Thus, as shown in FIG. 15C, the upper and lower parts of the folded skin are bonded to each other, so that air in the skin can be discharged.

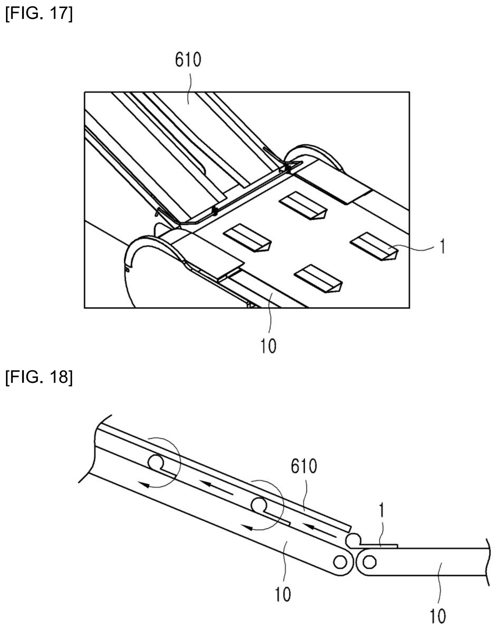

The rolling module 600 will be described with reference to FIGS. 16 and 17.

* The rolling module 600 is configured to rotate and roll the skin with the contents stuffed inside, so that the skin wraps the outside of the contents completely.

The rolling module 600 includes a contact unit 610. The contact unit 610 is positioned at the upper part of the conveyor belt 10 so that the upper part of the skin inserted into the rolling module 600 is folded.

As shown in FIG. 17, the skin with the contents stuffed inside is inserted into the rolling module 600 by the conveyor belt 10.

The upper part of the inserted skin comes into contact with the contact unit 610, and since the contact unit 610 does not operate like the conveyor belt 10, the lower part of the skin is moved by the conveyor belt 10 in a state where the skin is folded on the contact unit 610, so that rotation occurs, and thus, the skin wraps the outside of the contents completely.

Thus, the spring roll in which the skin wraps the outside of the contents completely, is discharged from the rolling module 600.

The spring roll discharged from the rolling module 600 is inserted into a steaming module so that a process of cooking by frying in oil or steaming can be performed and then, a freezing process and packaging can be performed.

According to the skin formation device and the spring roll manufacturing apparatus including the same according to the present invention, the following effects can be attained.

1) A skin formation module is separately provided to form and provide skins of various materials or textures, not ready-made ones, so that spring rolls having various skins can be manufactured.

2) A cutting module cuts the skin into a shape with a large bonding area so that the completeness of the spring roll can be increased.

3) A powder module additionally applies powder to the skin so that the texture of spring rolls can be enhanced.

While the present invention has been particularly shown and described with reference to exemplary embodiments thereof, it will be understood by those of ordinary skill in the art that various changes in form and details may be made therein without departing from the spirit and scope of the present invention as defined by the following claims.

### (Explanation of reference numerals)

100: skin formation module
200: cutting module
300: powder module
400: stuffing module
500: folding module
600: rolling module

## Claims

1. A skin formation module comprising:
a drum that is rotatably installed;
a heating unit for supplying heat to the drum; and
a batter spray unit for spraying batter onto an outer circumferential surface of the drum.

2. The skin formation module of claim 1, further comprising a batter hopper in
which batter is accommodated, and a batter pump for supplying the batter accommodated in the batter hopper to a batter spray unit.

3. The skin formation module of claim 2, wherein a skin material
accommodated in the batter hopper is supplied to the batter spray unit by the batter pump and is sprayed to one side of a surface of the drum, and the sprayed batter becomes skin in a cooked state by the surface of the drum heated by a heating unit and is discharged to the other side of the drum.

4. The skin formation module of claim 1, further comprising:
a cover that wraps an upper part of the drum; and
a steam exhaust unit in which an upper part of the cover is open.

5. A spring roll manufacturing apparatus comprising:
the skin formation module of one of claims 1 through 4; and
a cutting module, a powder module, a stuffing module, a folding module, and a
rolling module, which are sequentially positioned at a rear end of the skin formation module, and a conveyor belt that passes through each of the modules from the rear end of the skin formation module.

6. The spring roll manufacturing apparatus of claim 5, wherein the cutting
module comprises a cutting blade including a straight line portion and a bending portion bent to form a mountain shape in a center of the straight line portion.

7. The spring roll manufacturing apparatus of claim 6, wherein a skin
discharged from the skin formation module is inserted into the cutting module, and front and rear ends of the inserted skin are cut and discharged in a shape corresponding to the cutting blade.

8. The spring roll manufacturing apparatus of claim 5, wherein the powder module comprises:
an application unit positioned at an upper part of the conveyor belt; and
a vibration unit positioned at an upper part of the application unit.

9. The spring roll manufacturing apparatus of claim 8, wherein the application
unit applies powder onto a surface of the skin inserted into the powder module, and the vibration unit applies vibration to the application unit.

10. The spring roll manufacturing apparatus of claim 5, wherein the stuffing module comprises:
a timing belt positioned in a direction perpendicular to a direction of the conveyor belt at the upper part of the conveyor belt;
a supply unit for supplying contents of a spring roll to an ejection unit positioned at one side of the timing belt;
a cutting unit positioned at the ejection unit;
a stopper positioned on the conveyor belt; and
a pusher positioned at one side of the stopper.

11. The spring roll manufacturing apparatus of claim 10, wherein the supply
unit comprises an accommodation portion positioned at one side of the conveyor belt, a screw positioned inside the accommodation portion, and a content pump positioned at one side of the screw and for conveying the contents accommodated in the accommodation portion to the ejection unit.

12. The spring roll manufacturing apparatus of claim 10, wherein the contents
supplied from the supply unit to the ejection unit are cut by the cutting unit, are ejected onto the timing belt, are transported onto the conveyor belt and fall onto the skin that passes onto the conveyor belt by an action of the pusher in a state in which the contents stop in the center of the conveyor belt by the stopper.

13. The spring roll manufacturing apparatus of claim 5, wherein the folding module comprises:
a side fixing unit positioned at the upper part of the conveyor belt;
a side spray unit positioned at a lower part of the side fixing unit and for spraying air upwards; and
an upper pressing unit positioned at a rear end of the side fixing unit.

14. The spring roll manufacturing apparatus of claim 13, wherein a skin
having a surface with contents thereon is inserted into the folding module, and after the skin at both sides of the contents is pressurized by the side fixing unit and both sides of the skin are folded inwards by air pressure sprayed by the side spray unit, the upper part of the skin is pressurized by an upper pressing unit.

15. The spring roll manufacturing apparatus of claim 5, wherein the rolling
module comprises a contact unit that is positioned at the upper part of the conveyor belt so that the upper part of the skin inserted from the folding module contacts.

16. The spring roll manufacturing apparatus of claim 15, wherein the upper
part of the skin with the contents stuffed inside inserted into the rolling module comes into contact with the contact unit and is rotated by a transportation action of the conveyor belt so that the skin wraps the contents completely.
